(19) Europäisches Patentamt

European Patent Office

Office européen des brevets

(11) EP 1 720 361 A1

(12) **EUROPEAN PATENT APPLICATION**

(43) Date of publication:
08.11.2006 Bulletin 2006/45

(51) Int Cl.:
*H04N 9/64* (2006.01)    *H04N 1/62* (2006.01)
*G06T 5/00* (2006.01)

(21) Application number: 06252358.4

(22) Date of filing: 04.05.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 05.05.2005 US 678299 P
24.01.2006 US 339313

(71) Applicant: Genesis Microchip, Inc.
Alviso, CA 95002 (US)

(72) Inventors:
• MacKinnon, Andrew
North York, Ontario
M2L 4S6 (CA)
• Swartz, Peter
San Jose, CA 95120 (US)

(74) Representative: Brown, George Laurence
Urquhart-Dykes & Lord LLP
Tower North Central
Merrion Way
Leeds LS2 8PA (GB)

(54) **Apparatus for detecting, correcting and processing in hue, saturation and luminance directions**

(57)    A method, system and apparatus for color management that directly acts upon the hue, saturation, and luminance value of a pixel instead of its U and V value. Additionally, instead of dividing the color space into uniform areas, the color space is divided into multiple user-defined regions. The detection of a pixel is based on its hue, saturation, and luminance value, so a single set of values can define the correction for an entire hue.

Fig. 9

**Description**

The invention relates to local control of color

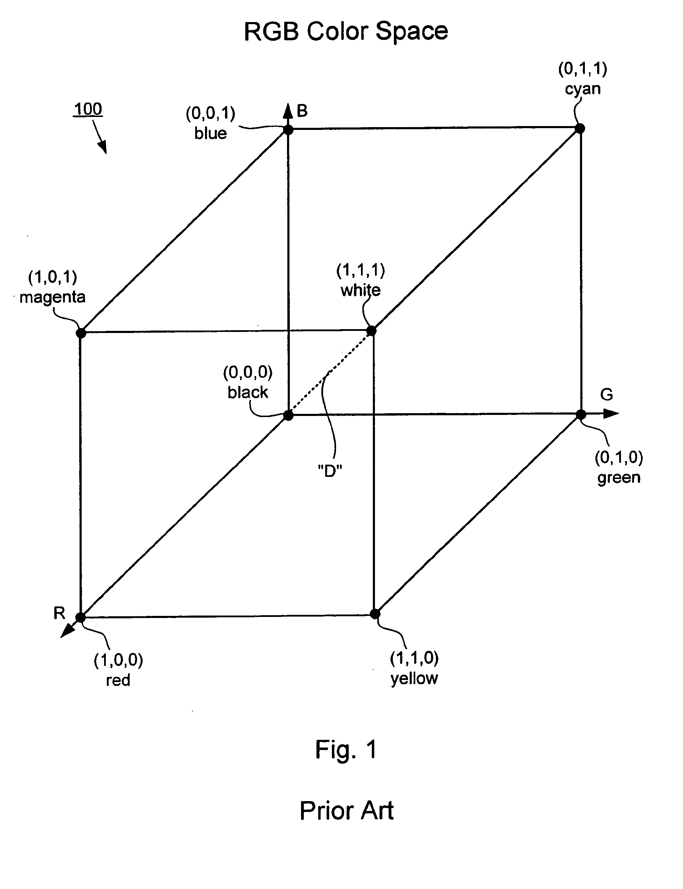

A number of color models have been developed that attempt to represent a gamut of colors, based on a set of primary colors, in a three-dimensional space. Each point in that space depicts a particular hue; some color models also incorporate brightness and saturation. One such model is referred to as the RGB (Red, Green, Blue) color model. A common representation of the prior art RGB color model is shown in the Fig. 1. Since the RGB color model is mapped to a three dimensional space based upon on a cube 100 with Cartesian coordinates (R,G,B), each dimension of the cube 100 represents a primary color. Similarly, each point within the cube 100 represented by a triplet (r,g,b) represents a particular hue where the coordinates (r,g,b) show the contributions of each primary color toward the given color. For sake of simplicity only, it is assumed that all color values are normalized so that the cube 100 is a unit cube such that all values of R,G, and B are in the range of [0,1].

As illustrated, the first coordinate (r) represents the amount of red present in the hue; the second coordinate (g) represents green; and the third (b) coordinate refers to the amount of blue. Since each coordinate must have a value between 0 and 1 for a point to be on or within the cube, pure red has the coordinate (1, 0, 0); pure green is located at (0, 1, 0); and pure blue is at (0, 0, 1). In this way, the color yellow is at location (1, 1, 0), and since orange is between red and yellow, its location on this cube is (1, ½, 0). It should be noted that the diagonal D, marked as a dashed line between the colors black (0, 0, 0) and white (1, 1, 1), provides the various shades of gray.

In digital systems capable of accommodating 8-bit color (for a total of 24-bit RGB color), the RGB model has the capability of representing $256^3$, or more, than sixteen million colors representing the number of points within and on the cube 100. However, when using the RGB color space to represent a digital image, each pixel has associated with it three color components representing one of Red, Green, and Blue image planes. In order, therefore, to manage color in an image represented in the RGB color space by removing, for example, excess yellow due to tungsten filament based illumination, all three color components in RGB color space are modified since each of the three image planes are cross related. Therefore, when removing excess yellow, for example, it is difficult to avoid affecting the relationship between all primary colors represented in the digital image. The net result being that important color properties in the image, such as flesh tones, typically do not appear natural when viewed on an RGB monitor.

It is realized then, that the RGB color space may not be best for enhancing digital images and an alternative color space, such as a hue-based color space, may be better suited for addressing this technical problem. Therefore, typically when enhancing a digital image by, for example, color correction, the digital image is converted from the RGB color space to a different color space more representative of the way humans perceive color. Such color spaces include those based upon hue since hue is a color attribute that describes a pure color (pure yellow, orange, or red). By converting the RGB image to one of a hue-based color space, the color aspects of the digital image are decoupled from such factors as lightness and saturation.

One such color model is referred to YUV color space. The YUV color space defines a color space in terms of one luminance (Y) and two chrominance components (UV) where Y stands for the luminance component (the brightness) and U and V are the chrominance (color) components that are created from an original RGB source. The weighted values of R, G and B are added together to produce a single Y signal, representing the overall brightness, or luminance, of that spot. The U signal is then created by subtracting the Y from the blue signal of the original RGB, and then scaling; and V by subtracting the Y from the red, and then scaling by a different factor. This can be accomplished easily with analog circuitry.

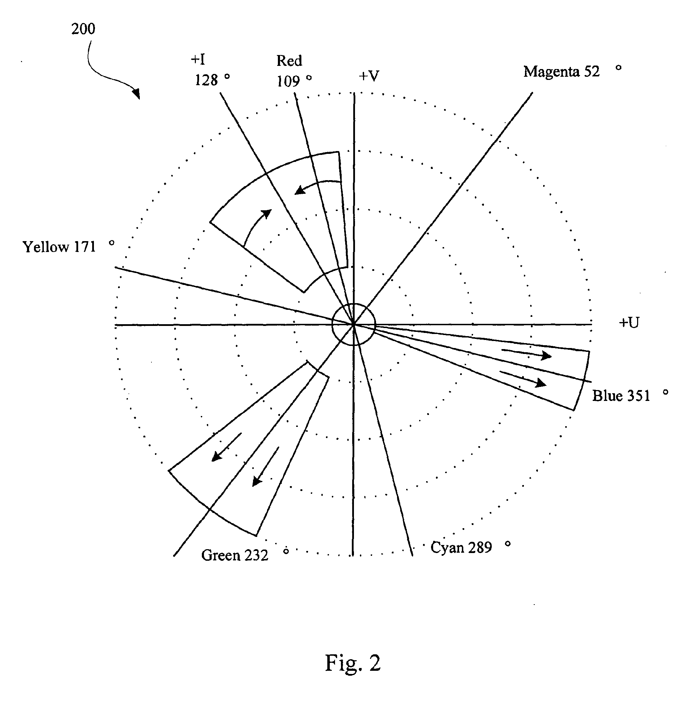

Fig. 2 shows a projective representation of the three dimensional YUV color space into the UV plane 200. In the UV space, color perception is a function of two values. Hue is the perceived color and is measured as an angle from the positive U axis. Saturation is the colorfulness of a pixel and is the magnitude of the polar vector from the UV origin, which is defined as the point of zero saturation (the grey point) at U=V=0, where U and V range from +/-112.5. On the UV plane 200, Hue is represented by the angular distance θ (Theta) from the +U line (at 0 degrees). Saturation is represented by the magnitude R (Rho) of the distance from the origin (00), whereas Luminance is represented by the magnitude Y of the distance perpendicular to the UV plane. Conventional color management systems provide local control of color in the YUV domain by dividing the UV plane 200 into multiple squares with two levels of coarseness. The vertices of these squares are then used as control points; with each vertex a UV offset is specified. These offset values are interpolated between control points to derive UV offsets for the entire UV plane.

Unfortunately, however, since the UV space is partitioned using squares, interpolations occur that are not parallel to hue or saturation in most areas. This causes visible artifacts since the control grids are coarse. Such artifacts include undesired hues at the grid boundaries since the definable grids are not fine enough to prevent these effects. For example, flesh tone adjustments cause undesirable changes to hues near the flesh tone. If the intended adjustment occurs on a point surrounded by fine grids then a reasonable adjustment can be made. However when the color to be adjusted is bordered by coarse and fine grids, then either a coarse grid is adjusted, modifying colors not intended for manipulation, or edge effects can occur if the coarse grid is not modified, since no fading is done. Furthermore, the color adjustments occur in the UV plane irrespective of luminance (Y) value of the input, and cannot affect the luminance value itself. This is not desirable in some cases: for example, flesh tone may be best modified in the middle luminance band, with reduced effects in high/low luminance ranges, while the red axis control may be best modified in the low luminance range.

Therefore, what is desired is a method that acts directly upon hue, saturation, and luminance value of a pixel instead of its U and V value.

Broadly speaking, the invention describes a method, system, and apparatus that directly acts upon the hue, saturation, and luminance value of a pixel instead of its U and V value. Additionally, instead of dividing the color space into uniform areas, one described embodiment uses multiple user-defined regions. In this way, since detection and correction region is defined explicitly, the user is assured no colors other than those he chooses to affect will be changed. Because the detection and correction region is defined explicitly, the user is assured no colors other than those he chooses to affect will be changed. One described embodiment adds the ability to define a pixel's adjustment based on its input luminance value in addition to its color and provides the ability to modify the pixel's luminance. The detection of a pixel is based on its hue, saturation, and luminance value, so a single set of values can define the correction for an entire hue. This simplifies the program compared to other systems in which multiple correction values were needed to affect a single hue across all saturation values. Correction fading occurs in the hue, saturation, and luminance directions instead of the U and V directions as with other systems such that smooth fading can be used without affecting hues other than those specified.

As a method, the invention is performed by converting the pixel's color space from Cartesian coordinates to polar coordinates, determining whether the pixel lies within a 3-dimensional region described by a set of region parameters, applying a correction factor based upon the pixel's location in the 3-dimensional region, and converting the pixel's polar coordinates to Cartesian coordinates.

Other aspects and advantages of the invention will become apparent from the following detailed description taken in conjunction with the accompanying drawings which illustrate, by way of example, the principles of the invention. Embodiments of the invention will now be described by way of example with reference to the accompanying drawings, in which:

Fig. 1 shows a representation of the RGB color space.
Fig. 2 shows a representation of the YUV color space.
Fig. 3 illustrates a conventional NTSC standard TV picture
Fig. 4 shows a block diagram of a real-time processor system in accordance with an embodiment of the invention is shown.
Fig. 5 shows a representative pixel data word in accordance with the invention is shown suitable for an RGB based 24 bit (or true color) system.
FIG. 6 shows a scan line data word in accordance with an embodiment of the invention.
Fig. 7 shows a particular embodiment of the digital signal processing engine configured as a processor to provide the requisite hue based detection and processing in accordance with the invention.
FIG. 8 shows a conversion from Cartesian to polar co-ordinates.
Fig. 9 shows a representative region in accordance with an embodiment of the invention.
Fig. 10 shows a Table 1 with representative region values in accordance with an embodiment of the invention.
Fig. 11 shows a flowchart describing a process for detecting a region in which a particular pixel resides in accordance with an embodiment of the invention.
Fig. 12 shows a flowchart detailing a process for calculating region distance in accordance with an embodiment of the invention.
FIG. 13 illustrates a system employed to implement the invention.

Reference will now be made in detail to a particular embodiment of the invention an example of which is illustrated in the accompanying drawings. While the invention will be described in conjunction with the particular embodiment, it will be understood that it is not intended to limit the invention to the described embodiment. To the contrary, it is intended to cover alternatives, modifications, and equivalents as may be included within the scope of the invention, which is defined by the appended claims.

Broadly speaking, the invention describes a method, system, and apparatus that directly acts upon the hue, saturation, and luminance value of a pixel instead of its U and V value only. Additionally, instead of dividing the color space into uniform areas, one described embodiment uses multiple user-defined regions. In this way, since detection and correction regions are defined explicitly, it is assured no colors other than those chosen to be affected will be changed. One described embodiment adds the ability to define a pixel's adjustment based on its input luminance value in addition to its color and therefore provides the ability to modify the pixel's luminance. Since the detection of a pixel is based on its hue, saturation, and luminance value, a single set of values can define the correction for an entire hue. This approach is great improvement over systems in which multiple correction values were needed to affect a single hue across all saturation values. Furthermore, smooth fading can be used without affecting hues other than those specified since correction fading occurs in the hue, saturation, and luminance directions instead of the U and V directions provided with other systems.

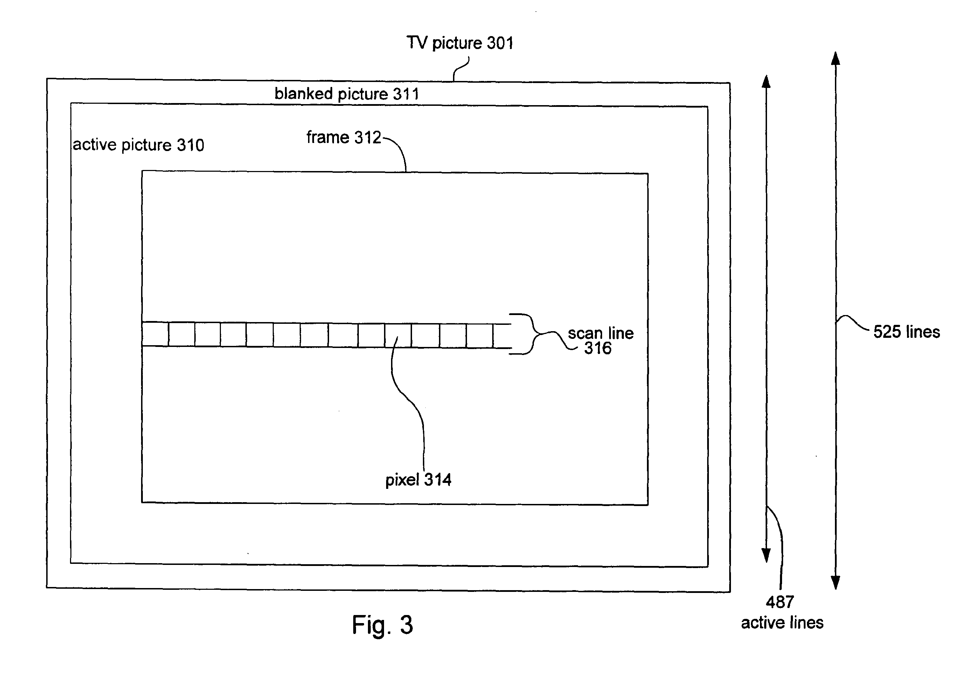

The invention will now be described in terms of a system based upon a video source and a display such as a computer monitor, television (either analog or digital), etc. In the case of a television display, Fig. 3 illustrates a conventional NTSC standard TV picture 301. The TV picture 301 is formed of an active picture 310 that is the area of the TV picture 301 that carries picture information. Outside of the active picture area 310 is a blanking region 311 suitable for line and field blanking. The active picture area 310 uses frames 312, pixels 314 and scan lines 316 to form the actual TV image. The frame 312 represents a still image produced from any of a variety of sources such as an analog video camera, an analog television, as well as digital sources such as a computer monitor, digital television (DTV), etc. In systems where interlaced scan is used, each frame 312 represents a field of information. Frame 312 may also represent other breakdowns of a still image depending upon the type of scanning being used.

In the digital format, each pixel is represented by a brightness, or luminance component (also referred to as luma, "Y") and color, or chrominance, components. Since the human visual system has much less acuity for spatial variation of color than for brightness, it is advantageous to convey the brightness component, or luma, in one channel, and color information that has had luma removed in the two other channels. In a digital system each of the two color channels can have considerably lower data rate (or data capacity) than the luma channel. Since green dominates the luma channel (typically, about 59% of the luma signal comprises green information), it is sensible, and advantageous for signal-to-noise reasons, to base the two color channels on blue and red. In the digital domain, these two color channels are referred to as chroma blue, Cb and chroma red Cr.

In composite video, luminance and chrominance are combined along with the timing reference 'sync' information using one of the coding standards such as NTSC, PAL or SECAM. Since the human eye has far more luminance resolving power than color resolving power, the color sharpness (bandwidth) of a coded signal is reduced to far below that of the luminance.

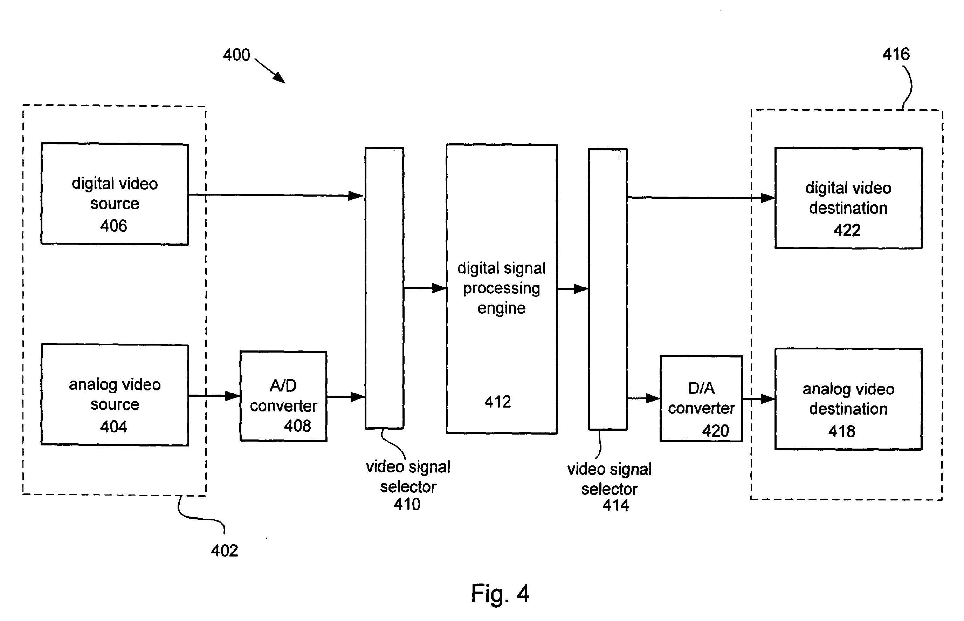

Referring now to Fig. 4, a block diagram of a real-time processor system 400 in accordance with an embodiment of the invention is shown. Real-time processor system 400 includes an image source 402 arranged to provide any number of video input signals for processing. These video signals can have any number and type of well-known formats, such as BNC composite, serial digital, parallel digital, RGB, or consumer digital video. The signal can be analog provided the image source 402 includes, analog image source 404 such as for example, an analog television, still camera, analog VCR, DVD player, camcorder, laser disk player, TV tuner, settop box (with satellite DSS or cable signal) and the like. The image source 402 can also include a digital image source 406 such as for example a digital television (DTV), digital still camera, and the like. The digital video signal can be any number and type of well known digital formats such as, SMPTE 274M-1995 (1920 x 1080 resolution, progressive or interlaced scan), SMPTE 296M-1997 (1280 x 720 resolution, progressive scan), as well as standard 480 progressive scan video.

In the case where the image source 402 provides an analog image signal, an analog-to-digital converter (A/D) 408 is connected to the analog image source 404. In the described embodiment, the A/D converter 408 converts an analog voltage or current signal into a discrete series of digitally encoded numbers (signal) forming in the process an appropriate digital image data word suitable for digital processing.

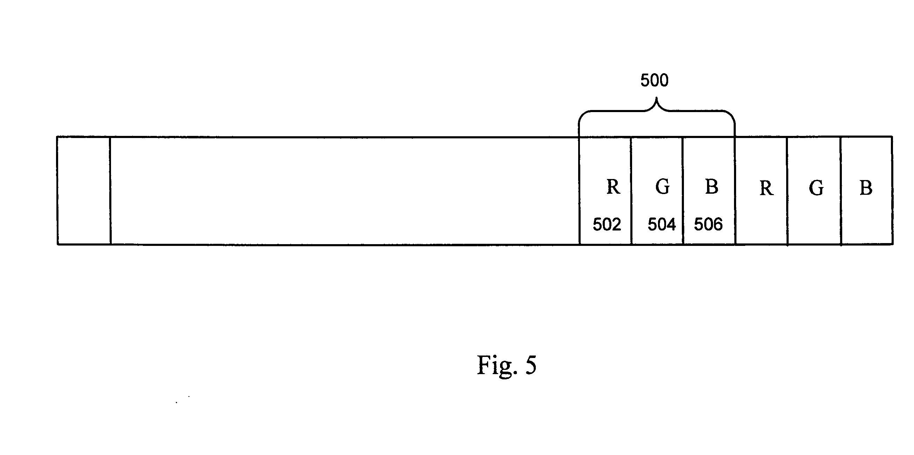

Accordingly, Fig. 5 shows a representative pixel data word 500 in accordance with the invention is shown suitable for an RGB based 24 bit (or true color) system. It should be noted, however, that although an RGB based system is used to describe the pixel word 500 the following discussion is applicable to any color space, such as YUV. Accordingly, in the RGB color space, the pixel data word 500 is formed of 3 sub-pixels, a Red (R) sub-pixel 502, a Green (G) sub-pixel 504, and a Blue (B) sub-pixel 506 each sub-pixel being $n$ bits long for a total of $3n$ bits. In this way, each sub-pixel is capable of generating $2^n$ (i.e., 256) voltage levels (sometimes referred to as bins when represented as a histogram). For example, in a 24 bit color system, $n = 8$ and the B sub-pixel 506 can be used to represent 256 levels of the color blue by varying the transparency of the liquid crystal which modulates the amount of light passing through the associated blue mask whereas the G sub-pixel 504 can be used to represent 256 levels of color. For the remaining discussion, a shorthand nomenclature will be used that denotes both the color space being used and the color depth (i.e., the number of bits per pixel). For example, the pixel data word 500 is described as RGB888 meaning that the color space is RGB and each sub-pixel (in this case) is 8 bits long.

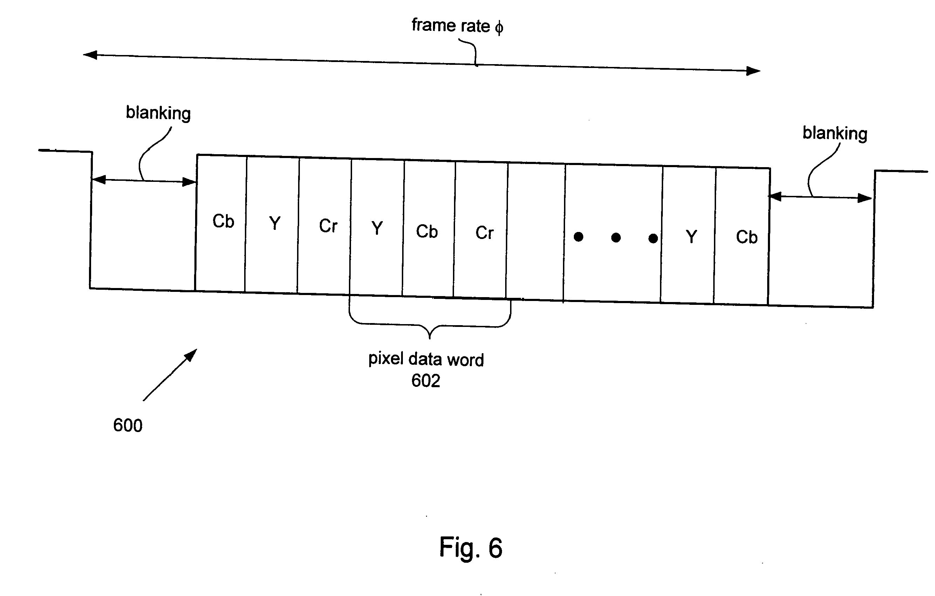

Accordingly, the A/D converter 408 uses what is referred to as 4:x:x sampling to generate a scan line data word 600 (formed of pixel data words 500) as shown in Fig. 6. It should be noted that 4:x:x sampling is a sampling technique applied to the color difference component video signals (Y, Cr, Cb) where the color difference signals, Cr and Cb, are sampled at a sub-multiple of the luminance Y frequency. If 4:2:2 sampling is applied, the two color difference signals Cr and Cb are sampled at the same instant as the even luminance Y samples. The use of 4:2:2 sampling is the 'norm' for professional video as it ensures the luminance and the chrominance digital information is coincident thereby minimizing chroma/luma delay and also provides very good picture quality and reduces sample size by 1/3.

Referring back to Fig. 4, an inboard video signal selector 410 connected to the digital image source 406 and the A/D converter 408 is arranged to select which of the two image sources (analog image source 404 or digital image source 406) will provide the digital image to be enhanced by a digital image processing engine 412 connected thereto. After appropriately processing the digital image received from the video signal selector 410, the digital image processing engine 412 outputs an enhanced version of the received digital image to an outboard video signal selector 414. As with the inboard video selector 410, the outboard video selector 414 is arranged to send the enhanced digital signal to an image display unit 416. The image display unit 416 can include a standard analog TV, a digital TV, computer monitor, etc. In the case where the image display unit 416 includes an analog display device 418, such as a standard analog TV, a digital-to-analog (D/A) converter 420 connected to the outboard video signal selector 414 converts the enhanced digital signal to an appropriate analog format.

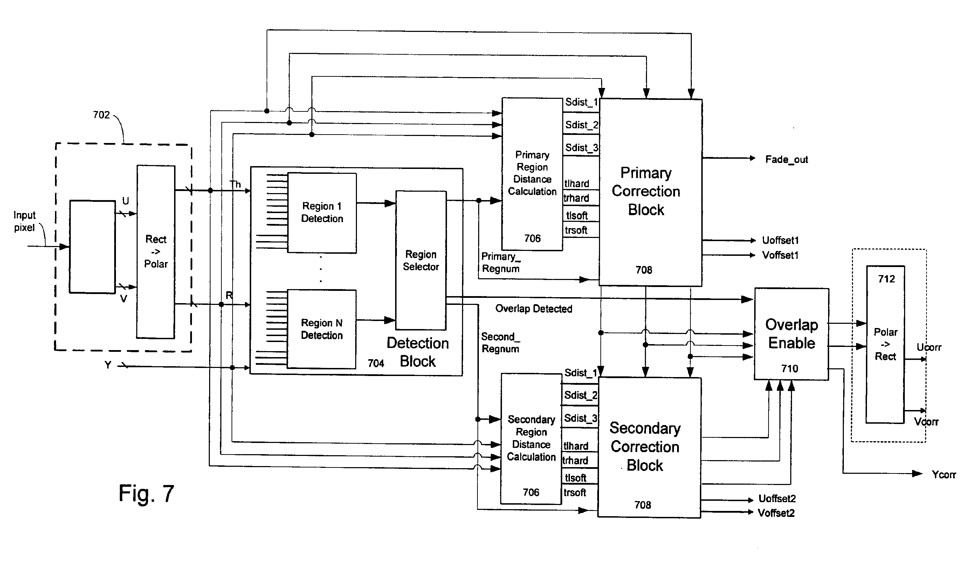

Fig. 7 shows a particular embodiment of the digital signal processing engine 412 configured as a processor 700 to provide the requisite hue based detection and processing in accordance with the invention. According, the processor 700 includes an input pixel format detection and converter unit 702, a region detector and selector block 704, a region distance calculation block 706, a correction block 708 that provides for hue correction block, saturation correction, and fade correction, an overlap enable block 710, and a U/V offset application and final output block 712.

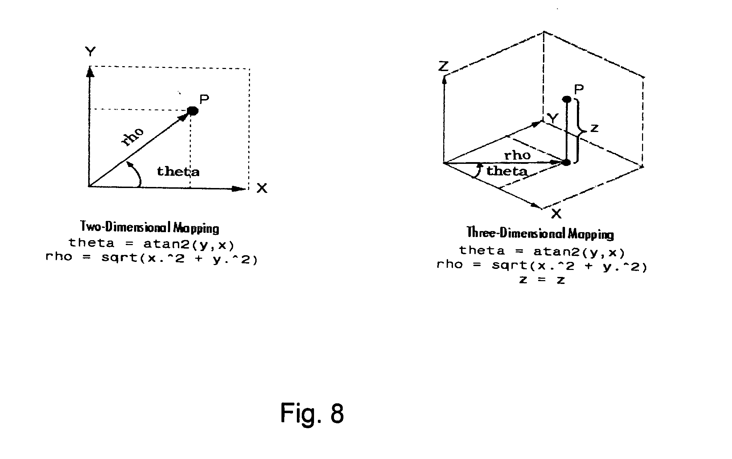

In order to preserve memory resources and bandwidth, the input pixel format detection and converter unit 702 detects the input pixel format and if determined to not be YUV color space, the input pixel data word format is converted to the YUV color space based upon any well known conversion protocols based upon the conversion shown in Fig. 8. Once converted to the YUV color space, the input pixel data word length is then set to YUV444 format whereby each the sub-pixel data word lengths are set to 4 bits (or whatever other format is deemed appropriate for the particular application at hand).

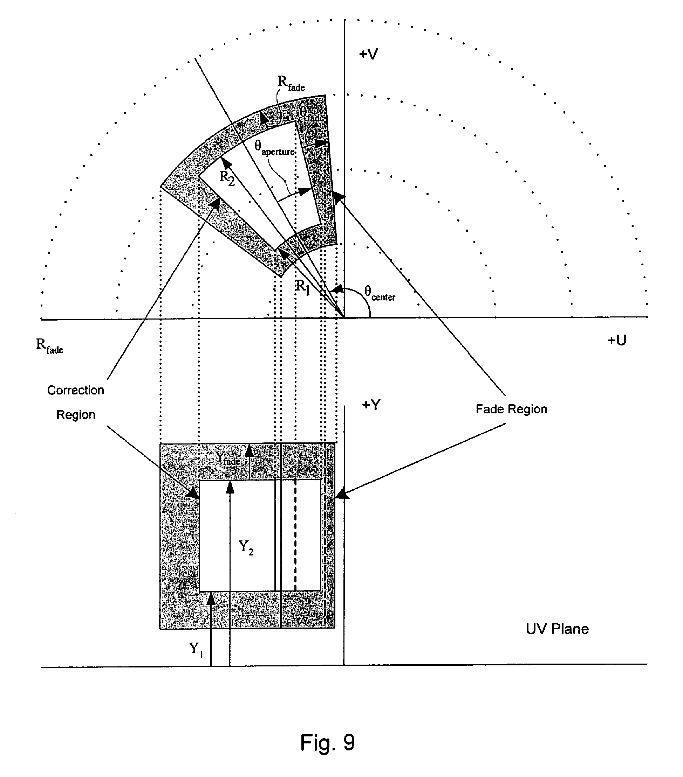

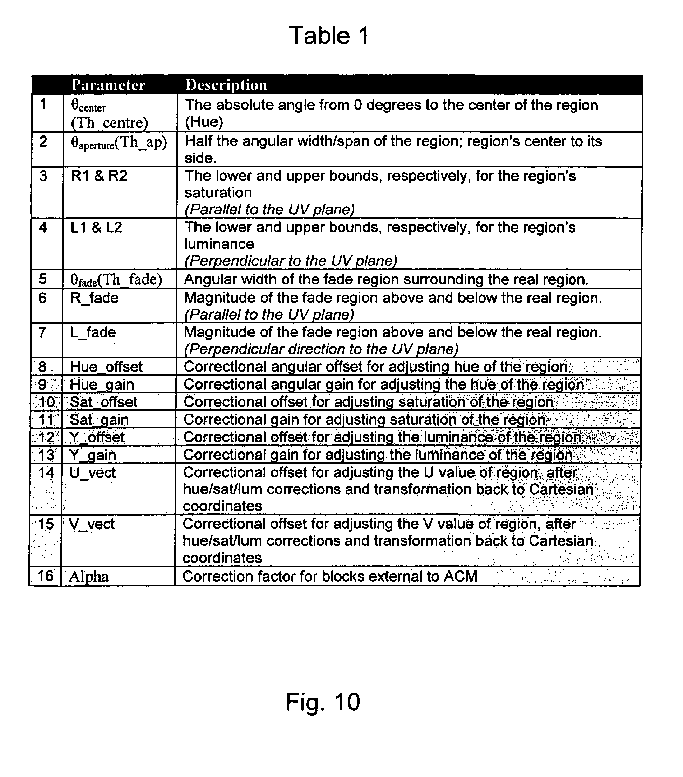

In addition to providing a single format, the described embodiment utilizes multiple region definitions plus their associated correction parameters as illustrated in Figs. 9 and Fig. 10 showing a Table 1. A region 902 is defined by the following parameters: {$\theta_{center}$, $\theta_{aperture}$, $R_1$, $R_2$, $Y_1$, and $Y_2$} define a correction region 904, while {$\theta_{fade}$, $R_{fade}$, and $Y_{fade}$} define a fade region 906 in the hue, saturation, luminance (YUV) color space where $\theta$ refers to the hue of the color and R refers to the saturation of the color. Within each region pixels are modified in additive (offset) or multiplicative (gain) manners according to the correction parameters: Hue_offset, Hue_gain, Sat_offset, Sat_gain, Lum_offset, Lum_gain, U_offset, and V_offset. Full correction is applied to all pixels within a correction region, while the amount of correction decreases in the fade region from full at the edge of the correction and fade regions to zero at the edge of the fade area furthest from the correction region.

In the described embodiment, each region has its own unique user-configurable values for all parameters $\theta_{center}$, $\theta_{aperture}$, $R_1$, $R_2$, $Y_1$, and $Y_2$, Hue_offset, Hue_gain, Sat_offset, Sat_gain, Lum_offset, Lum_gain, U_offset, and V_offset (see Table 1 in Fig. 10 for an exemplary set of values). In some situations a particular color may reside in multiple regions, for this reason, an interpolative process is used to determine how much of each of the correction is applied to give the final result. One implementation uses a priority/series correction approach that corrects the pixel by the highest priority region first and then passes this corrected value into a second correction block for the lower priority region. Although the described implementation allows for 2 regions of overlap, other implementations are contemplated using more than 2 regions of overlap.

### Region Detection

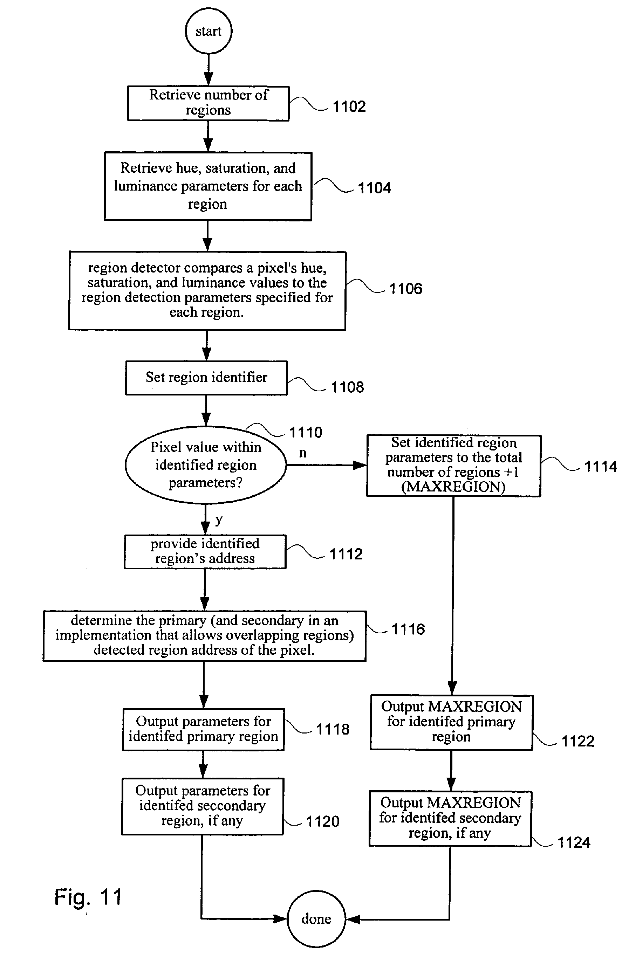

Referring back to Fig. 7, in the described embodiment, a particular region (or regions in the case of overlap) in which any given pixel resides is detected by the detection block 704 (using a process 1100 shown in a flowchart illustrated in Fig. 11) so as to apply the appropriate correction parameters. In the described embodiment, this region detection process is based upon the presumption that any pixel may be within a maximum of two regions; that is, up to two regions may overlap at any point. In a particular implementation, one region detector per region, plus a single region selector 705 is used for the detection process. The process 1100 begins at 1102 by retrieving the number of regions to be used. In the instant case, the number of regions to be used is two but can be any number deemed appropriate. At 1104, the hue, saturation, and luminance parameters for each region is retrieved and at 1106, each region detector (one for each region) compares a pixel's hue, saturation, and luminance values to the region detection parameters specified for each region. At 1108, a region identifier is set and if, at 1110, the detector finds that the pixel is within its region, the region's address is identified at 1112. If, however, it has been determined at 1110, the pixel is not within the region, the detector outputs a value equal to the total number of regions +1, designated MAX_REGION at 1114. For example, the region detector for region 2 would use the parameters $\theta_{center}$, $\theta_{aperture}$, $R_1$, $R_2$, $Y_1$, $Y_2$, $\theta_{fade}$, $R_{fade}$, and $Y_{fade}$, for region 2; if the pixel is within the ranges delimited by these values, the detector outputs '2,' otherwise 'MAX_REGION.'

At 1116 and 1118, respectively, the region selector 705 determines the primary (and secondary in an implementation that allows overlapping regions) detected region address of the pixel. The primary region is the detected region with the lowest address number, and the secondary region is that with the second-lowest number. For example, if a pixel is within the overlapping area of regions 3 and 6, the primary region is 3, and the secondary is 6. If the pixel is not within any defined region, both the primary and the secondary regions are equal to MAX_REGION at 1120 and 1122, respectively.

**Region Distance Calculation**

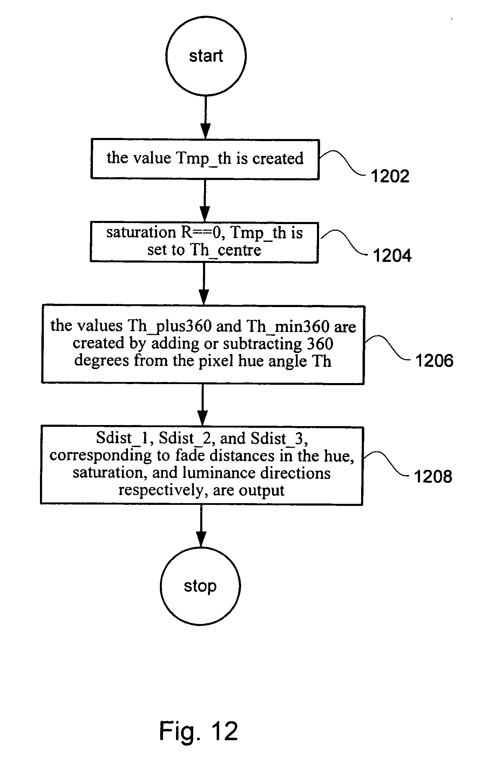

To facilitate the linear fade from the edge of the full correction ("hard") area through the fade region to the nearby non-corrected pixels, the distance from the edge of the hard area of a pixel in the fade area must be calculated. Then, later in the correction block, if a pixel is, for example, 1/3 of the way from the hard area to the outer edge of the fade area, then (1-1/3) = 2/3 of the specified correction will be applied. A pixel within the hard area of a region will cause a distance of 0 to be generated, indicating full strength correction throughout the hard region. Each pixel channel (hue angle, saturation magnitude, and luminance) has an associated distance calculation that is output separately from the distance calculation block 706. The hue $\theta$ (Th) path is calculated according to the process 1200 shown by the flowchart of Fig. 12. First, at 1202, the value $\theta_{th}$ is created. If the saturation is 0, the hue angle is indeterminate. If the pixel correction includes a saturation offset, the saturation should in fact occur along the centerline of the region. Therefore, if the saturation R==0 at $\theta_{th}$ is set to $\theta_{centre}$ for the primary or secondary region as appropriate at 1204. Next at 1206, the values $\theta\_plus360$ and $\theta\_min360$ are created by adding or subtracting 360 degrees from the pixel hue angle $\theta$. This is necessary to account for the (modulo 360) nature of the hue angle. For example, if $\theta\_centre=0$, and $\theta\_ap=30$, the region hard area is defined from 0+30 = 30 degrees to 0-30 = -30 degrees. Since the Cartesian to polar block outputs hue angles from 0 to 360, a pixel with hue angle $\theta$ = 359 would not be detected within the region. Similarly if a region was defined as $\theta\_centre=359$, and $\theta\_ap=30$, the region hard area is defined from 359+30 = 389 degrees to 359-30 = 329 degrees. A pixel with hue angle $\theta=0$ would be falsely excluded from this region. It is for this reason the region boundaries are compared with $\theta$, $\theta\_plus360$, and $\theta\_min360$. Sdist_1, Sdist_2, and Sdist_3, corresponding to fade distances in the hue, saturation, and luminance directions, respectively, are output from the block at 1208 (as unsigned 8 bit integer + 7 fractional bit values or as appropriate). In the described embodiment, there are as many region distance calculation blocks are there are regions. For example, in Fig. 7, there are two region distance calculation blocks, one for each of the primary and secondary detected regions.

**Correction**

The correction blocks, one for each of the primary and secondary detected regions, encapsulate all the operations necessary to apply the appropriate region-based corrections to input pixels. Each block takes as input a hue angle, saturation value, and luminance value and outputs a corrected hue angle, saturation value, and luminance value. In addition, the primary correction block also outputs the calculated Fade_factor. The correction block/function handles pixels differently depending on whether they lie in the "hard" region (non fade region) or lie in the fade region around the "hard" region. For a pixel inside the "hard" region, hue gain is applied to bring the hue further apart or closer to the region's theta-center. Saturation and luminance gain decreases or increases saturation and luminance for pixels in the region. Once the respective gains are applied, region specific hue, saturation, and luminance offsets are added

**Fade Factor Correction**

The application of a fade factor to the regional corrections is now described. Throughout the region's hard area the full regional correction values are applied. However, from the outer edge of the hard area to the outer edge of the fade area, the strength of correction declines linearly from 1 x correction (full strength) to 0 x correction (uncorrected pixels outside the region).
Conceptually, the fade factor is simply

$$[1-(Sdist\_1/fade\_dist\_hue)] \times [1-(Sdist\_2/fade\_dist\_sat)] \times [1-(Sdist\_3/fade\_dist\_lum)],$$

where sdist_x is the output of the region distance calculation block for each channel, and fade_dist_x is the length of the fade region in the relevant direction. Dividers are avoided by allocating registers to hold the values for 1/ fade_dist_x, which are calculated externally. One of the five registers simply contains the value 1/Th_fade. The other regions contain the inverse of the values Rsoftlower, Rsoftupper, Ysoftlower, Ysoftupper. These values are themselves calculated as the fade distance given clamping to 0 and 255. For example, Rsoftlower = min(R1, Rfade), and Rsoftupper = min (255-R2, Rfade).

### Hue Correction

As with the other correction paths (saturation and luminance), the hue correction path applies a hue gain and offset to the input hue value. However, the different operation of the hue gain function necessitates a difference in the hue correction path. First, $\theta\_diff$ is calculated as the signed difference between the region center angle $\theta\_centre$ and the pixel hue angle $\theta$. That is, if the saturation is zero, the region centre angle is used, and then a decision to use this value, or a value +/- 360 degrees is taken based on the region border angles. $\theta\_diff$ is then clamped to +/- Theta_ap. This clamped value is multiplied by $\theta\_gain$ and rightshifted three bits. This has the effect of moving the pixel's hue either towards or away from the center of the region, depending on the sign of $\theta\_gain$. Adding $\theta\_add$ to this value gives the total correction $\theta\_totoffset$ to be applied to the pixel within the hard area of the region. $\theta\_totoffset$ is multiplied by Fade_factor to reduce the correction strength if the pixel lies within the fade area, and the faded correction amount is added to the original hue angle $\theta$. Finally, the corrected output is reduced to a modulo 360 value before being output from the correction block as $\theta\_corr$.

### Saturation Correction

First, the input saturation value R is multiplied with Rgain and rightshifted 7 bits to give X = R * Rgain/128. This value is subtracted from R to isolate the amount of correction introduced by the gain. The saturation offset Radd is then added in to give the total saturation correction value, R_totoffset. The correction is then faded by multiplication with Fade_factor, added to the pixel saturation R, and clamped and rounded to the correct output bit width before being output as Rcorr. The luminance correction path is identical to the saturation correction path.

### U/V Offset

The U and V offset for a region are registered parameters for each region that give the amount of offset in the U or V direction. This offset is applied after the polar-to Cartesian conversion. This allows chroma adjustments that mere hue and saturation adjustments may not be sufficient to handle. For example, for blue shift it is desirable to have all pixels near grey (i.e. in a low-saturation circle centered on the origin) to shift towards high-saturation blue. Given the arbitrary hue angles of pixels in this region, neither pure hue nor pure saturation adjustments can achieve this. Therefore, a U and V offset is needed.

### Overlap Enable

If a pixel lies within the overlapping area of two regions, then hue, saturation, and luminance corrections will be applied first in the Primary Correction Block, then in the Secondary Correction Block. If the pixel lies only within one region though, only the correction from the Primary Correction Block should be applied. The Secondary Correction Block should be bypassed to maintain the best possible precision of the pixel data. The Overlap Enable block uses the Overlap_ Detected signal generated from the Region Selector to choose the output of either the Primary or Secondary Correction Block. It also calculates the total U and V offset to apply: either the sum of the U/V offsets from both Correction Blocks, or the Primary Correction Block U/V offsets only. To facilitate the ability to fade the U/V correction in the fade area of the region, the UN offset is passed into the correction block to be multiplied by the Fade_factor. The results, Ucorr and Vcorr, are output from the correction block to be processed and applied to the corrected pixel later.

### U/V Offset Application and Final Output

The final operation before pixels are output from the involves adding U and V offsets. These offsets are register parameters that were faded in the Correction Blocks and added together in the Overlap Enable block (0). They are now added into the output U and V channels respectively of the output pixel. The corrected YUV values are lastly clamped to a range of 0 to 255 to obtain Yfinal, Ufinal, and Vfinal. The last step is to mux the corrected final values and the original input values. If the pixel was detected as being in at least one region then the corrected YUV values Yfinal, Ufinal, Vfinal, are output from the block as Yout, Uout, Vout. If not, the original input pixel value Yin, Uin, Vin is output.

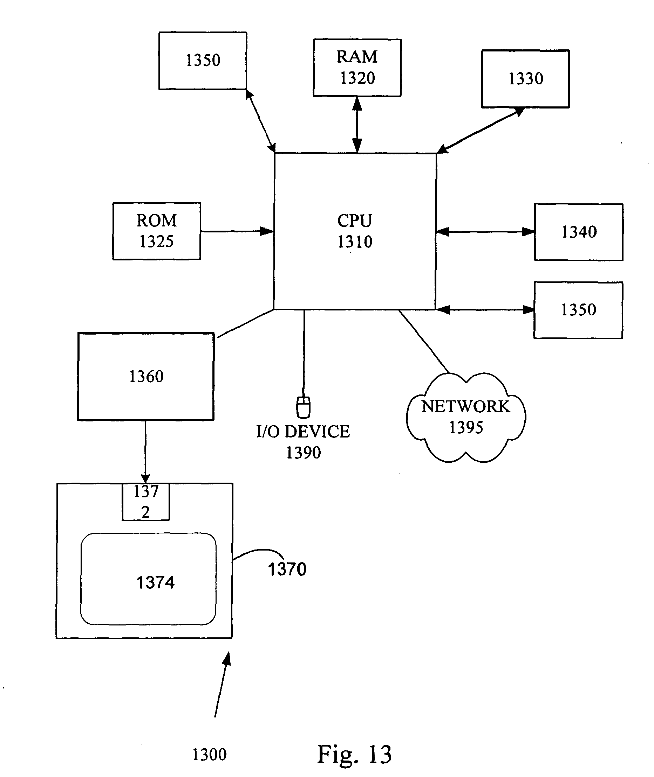

FIG. 13 illustrates a system 1300 employed to implement the invention. Computer system 1300 is only an example of a graphics system in which the present invention can be implemented. System 1300 includes central processing unit (CPU) 1310, random access memory (RAM) 1320, read only memory (ROM) 1325, one or more peripherals 1330, graphics controller 1360, primary storage devices 1340 and 1350, and digital display unit 1370. CPUs 1310 are also coupled to one or more input/output devices 1390. Graphics controller 1360 generates analog image data and a corresponding reference signal, and provides both to digital display unit 1370. The analog image data can be generated, for example, based on pixel data received from CPU 1310 or from an external encode (not shown). In one embodiment, the analog image data is provided in RGB format and the reference signal includes the $V_{SYNC}$ and $H_{SYNC}$ signals well known in the art. However, it should be understood that the present invention can be implemented with analog image, digital data and/or reference signals in other formats. For example, analog image data can include video signal data also with a corresponding time reference signal.

Although only a few embodiments of the present invention have been described, it should be understood that the present invention may be embodied in many other specific forms without departing from the scope of the present invention. The present examples are to be considered as illustrative and not restrictive, and the invention is not to be limited to the details given herein, but may be modified within the scope of the appended claims along with their full scope of equivalents.

While this invention has been described in terms of a preferred embodiment, there are alterations, permutations, and equivalents that fall within the scope of this invention. It should also be noted that there are many alternative ways of implementing both the process and apparatus of the present invention. It is therefore intended that the invention be interpreted as including all such alterations, permutations, and equivalents as fall within the scope of the present invention.

**Claims**

1.   An apparatus for processing a pixel, the apparatus comprising data processing means for executing the steps of:

converting the pixel's color space from Cartesian coordinates to polar coordinates;
determining whether the pixel lies within a 3-dimensional region described by a set of region parameters;
applying a correction factor based upon the pixel's location in the 3-dimensional region; and
converting the pixel's polar coordinates to Cartesian coordinates.

2.   A method for processing a pixel, comprising:

converting the pixel's color space from Cartesian coordinates to polar coordinates;
determining whether the pixel lies within a 3-dimensional region described by a set of region parameters;
applying a correction factor based upon the pixel's location in the 3-dimensional region; and
converting the pixel's polar coordinates to Cartesian coordinates.

3.   A method as recited in claim 2, wherein the color space is hue, saturation, and luminance (YUV) color space.

4.   A method as recited in claim 3, wherein the 3-dimensional region comprises:

a two dimensional U,V plane; and
a Y axis in a third dimension, wherein the two dimensional U,V, plane includes a color correction region that further includes a fade area that is a specified distance from an edge of the color correction region wherein the specified distance is computed in the U, V, and Y directions.

5.   A method as recited in claim 4, further comprising:

when the pixel location is in the fade area, then determining a fade factor based on the distance computed in the hue, saturation and luminance directions.

6.   A method as recited in claim 4, further comprising:

when the pixel's location is in the color correction region, then calculating a color correction factor based upon the pixel's location.

7.   A method as recited in claim 6, further comprising:

applying gain and offset parameters in the hue, saturation and luminance directions to determine a correction amount for applying to the pixel.

**8.** A method as recited in claim 7, further comprising:

converting the pixel's polar hue and saturation coordinates to Cartesian UV coordinates while leaving the pixel's modified luminance unchanged.

**9.** A method as recited in claim 8, further comprising:

reducing the correction amount by the fade factor; and
applying the reduced correction amount to the pixel

**10.** A computer readable medium comprising computer program code means that, when executed by a computer system, instructs the computer system to perform the method of any one of claims 2 to 9.

# RGB Color Space

**Fig. 1**

**Prior Art**

Fig. 2

Fig. 3

TV picture 301

blanked picture 311

active picture 310

frame 312

scan line 316

pixel 314

525 lines

487 active lines

EP 1 720 361 A1

Fig. 4

400

402
- digital video source 406
- analog video source 404
- A/D converter 408

video signal selector 410

digital signal processing engine 412

video signal selector 414

D/A converter 420

416
- digital video destination 422
- analog video destination 418

500

| | | R | G | B | R | G | B |
|---|---|---|---|---|---|---|---|
| | | 502 | 504 | 506 | | | |

Fig. 5

Fig. 6

Fig. 7

**Two-Dimensional Mapping**
theta = atan2(y,x)
rho = sqrt(x.^2 + y.^2)

**Three-Dimensional Mapping**
theta = atan2(y,x)
rho = sqrt(x.^2 + y.^2)
z = z

Fig. 8

Fig. 9

# Table 1

| | Parameter | Description |
|---|---|---|
| 1 | $\theta_{center}$ (Th_centre) | The absolute angle from 0 degrees to the center of the region (Hue) |
| 2 | $\theta_{aperture}$(Th_ap) | Half the angular width/span of the region; region's center to its side. |
| 3 | R1 & R2 | The lower and upper bounds, respectively, for the region's saturation *(Parallel to the UV plane)* |
| 4 | L1 & L2 | The lower and upper bounds, respectively, for the region's luminance *(Perpendicular to the UV plane)* |
| 5 | $\theta_{fade}$(Th_fade) | Angular width of the fade region surrounding the real region. |
| 6 | R_fade | Magnitude of the fade region above and below the real region. *(Parallel to the UV plane)* |
| 7 | L_fade | Magnitude of the fade region above and below the real region. *(Perpendicular direction to the UV plane)* |
| 8 | Hue_offset | Correctional angular offset for adjusting hue of the region |
| 9 | Hue_gain | Correctional angular gain for adjusting the hue of the region |
| 10 | Sat_offset | Correctional offset for adjusting saturation of the region |
| 11 | Sat_gain | Correctional gain for adjusting saturation of the region |
| 12 | Y_offset | Correctional offset for adjusting the luminance of the region |
| 13 | Y_gain | Correctional gain for adjusting the luminance of the region |
| 14 | U_vect | Correctional offset for adjusting the U value of region, after hue/sat/lum corrections and transformation back to Cartesian coordinates |
| 15 | V_vect | Correctional offset for adjusting the V value of region, after hue/sat/lum corrections and transformation back to Cartesian coordinates |
| 16 | Alpha | Correction factor for blocks external to ACM |

# Fig. 10

```
                          ( start )
                             |
                             v
              +------------------------------+
              |   Retrieve number of         |        1102
              |   regions                    |
              +------------------------------+
                             |
                             v
              +------------------------------+
              |  Retrieve hue, saturation,   |
              |  and luminance parameters    |        1104
              |  for each region             |
              +------------------------------+
                             |
                             v
              +------------------------------+
              |  region detector compares    |
              |  a pixel's hue, saturation,  |
              |  and luminance values to     |        1106
              |  the region detection        |
              |  parameters specified for    |
              |  each region.                |
              +------------------------------+
                             |
                             v
              +------------------------------+
              |   Set region identifier      |        1108
              +------------------------------+
                             |
                             v                          1110
                    (  Pixel value within  )     n    +------------------------------+
                    (  identified region    )--------->|  Set identified region       |
                    (  parameters?          )         |  parameters to the total      |   1114
                             |                          |  number of regions +1        |
                             | y                        |  (MAXREGION)                 |
                             v                          +------------------------------+
              +------------------------------+                       |
              |   provide identified         |   1112                |
              |   region's address           |                       |
              +------------------------------+                       |
                             |                                       |
                             v                                       |
              +------------------------------+                       |
              |  determine the primary (and  |                       |
              |  secondary in an             |   1116                |
              |  implementation that allows  |                       |
              |  overlapping regions)        |                       |
              |  detected region address     |                       |
              |  of the pixel.               |                       |
              +------------------------------+                       v
                             |                          +------------------------------+
                             v                          |  Output MAXREGION            |
              +------------------------------+          |  for identifed primary       |   1122
              |  Output parameters for       |   1118   |  region                      |
              |  identifed primary region    |          +------------------------------+
              +------------------------------+                       |
                             |                                       v
                             v                          +------------------------------+
              +------------------------------+          |  Output MAXREGION            |
              |  Output parameters for       |          |  for identifed secondary     |
              |  identifed seccondary        |   1120   |  region, if any              |   1124
              |  region, if any              |          +------------------------------+
              +------------------------------+                       |
                             |                                       |
                             |          ( done )<-------------------+
                             +---------->
```

## Fig. 11

start

the value Tmp_th is created — 1202

saturation R==0, Tmp_th is set to Th_centre — 1204

the values Th_plus360 and Th_min360 are created by adding or subtracting 360 degrees from the pixel hue angle Th — 1206

Sdist_1, Sdist_2, and Sdist_3, corresponding to fade distances in the hue, saturation, and luminance directions respectively, are output — 1208

stop

Fig. 12

1350

RAM
1320

1330

ROM
1325

CPU
1310

1340

1350

1360

I/O DEVICE
1390

NETWORK
1395

137
2

1374

1370

1300

Fig. 13

))) **European Patent
Office**

**EUROPEAN SEARCH REPORT**

Application Number

EP 06 25 2358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 202 935 A (KANAMORI ET AL) 13 April 1993 (1993-04-13) * column 6, line 12 - column 7, line 16 * * column 16, line 49 - column 17, line 16 * | 1-10 | INV. H04N9/64 H04N1/62 G06T5/00 |
| X | EP 1 385 331 A (SAMSUNG ELECTRONICS CO., LTD) 28 January 2004 (2004-01-28) * paragraph [0024] - paragraph [0035] * | 1-10 | |
| X | US 4 488 245 A (DALKE ET AL) 11 December 1984 (1984-12-11) * column 3, line 7 - line 32 * | 1-10 | |
| A | US 2003/016866 A1 (COOPER BRIAN C ET AL) 23 January 2003 (2003-01-23) * paragraph [0055] - paragraph [0058] * | 1-10 | |
| E | EP 1 694 054 A (SAMSUNG ELECTRONICS CO., LTD) 23 August 2006 (2006-08-23) * the whole document * | 1-10 | |

TECHNICAL FIELDS
SEARCHED (IPC)

H04N
G06T

The present search report has been drawn up for all claims

| Place of search | Date of completion of the search | Examiner |
|---|---|---|
| Munich | 30 August 2006 | Penchev, P |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   .................................................................................................
& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 06 25 2358

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2006

| Patent document cited in search report | | Publication date | Patent family member(s) | | Publication date |
|---|---|---|---|---|---|
| US 5202935 | A | 13-04-1993 | NONE | | |
| EP 1385331 | A | 28-01-2004 | CN<br>JP<br>US | 1479529 A<br>2004064792 A<br>2004017380 A1 | 03-03-2004<br>26-02-2004<br>29-01-2004 |
| US 4488245 | A | 11-12-1984 | DE<br>GB<br>JP | 3306442 A1<br>2117902 A<br>58186023 A | 13-10-1983<br>19-10-1983<br>29-10-1983 |
| US 2003016866 | A1 | 23-01-2003 | WO<br>US | 0178372 A2<br>6477271 B1 | 18-10-2001<br>05-11-2002 |
| EP 1694054 | A | 23-08-2006 | NONE | | |

EPO FORM P0459

For more details about this annex : see Official Journal of the European Patent Office, No. 12/82